(19) Europäisches Patentamt
European Patent Office
Office européen des brevets

(11) Veröffentlichungsnummer: **0 121 059**
**B1**

(12) # EUROPÄISCHE PATENTSCHRIFT

(45) Veröffentlichungstag der Patentschrift: **07.01.87**

(51) Int. Cl.⁴: **C 04 B 7/36,** C 04 B 7/44

(21) Anmeldenummer: **84101400.4**

(22) Anmeldetag: **10.02.84**

(54) **Verfahren zur Herstellung von Weisszement.**

(30) Priorität: **02.04.83 DE 3312029**

(43) Veröffentlichungstag der Anmeldung: **10.10.84 Patentblatt 84/41**

(45) Bekanntmachung des Hinweises auf die Patenterteilung: **07.01.87 Patentblatt 87/2**

(84) Benannte Vertragsstaaten: **AT BE DE FR GB IT**

(56) Entgegenhaltungen:
**DE - A - 2 952 711**

**F. KEIL: "ZEMENT. HERSTELLUNG UND EIGENSCHAFTEN". 1971, SPRINGER-VERLAG BERLIN, HEIDELBERG, (DE)**

(73) Patentinhaber: **Krupp Polysius AG, Graf-Galen-Strasse 17, D-4720 Beckum (DE)**

(72) Erfinder: **Weber, Paul, Dr.-Ing., Stromberger Strasse 72, D-4740 Oelde (DE)**

(74) Vertreter: **Tetzner, Volkmar, Dr.-Ing. Dr. Jur., Van-Gogh-Strasse 3, D-8000 München 71 (DE)**

**EP 0 121 059 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von Weisszement entsprechend dem Oberbegriff des Anspruches 1.

Ein Verfahren dieser Art ist beispielsweise aus F. Keil: «ZEMENT. HERSTELLUNG UND EIGENSCHAFTEN», 1971, Springer-Verlag Berlin, Heidelberg (DE) bekannt.

Bei der Herstellung von Weisszement müssen die Rohstoffe von grosser Reinheit sein, und es wird mit Öl oder Gas (nicht mit Kohle) gebrannt, um eine Verunreinigung durch Asche zu vermeiden. Das Brennen erfolgt ausserdem in reduzierender Atmosphäre, damit sich nicht das farbkräftige dreiwertige Ferri-Ion bildet. In reduzierender Ofenatmosphäre finden bei der Herstellung von Weisszement vor allem folgende Reduktionsreaktionen färbender Schwermetalloxyde statt:

$$Fe_3O_4 + CO \rightarrow 3FeO + CO_2$$

$$Fe_2O_3 + CO \rightarrow 2FeO + CO_2$$

$$MnO_2 + CO \rightarrow MnO + CO_2$$

$$2CrO_3 + 2CO \rightarrow Cr_2O_3 + 2CO_2 + 1/2\ O_2$$

Bei den bisher bekannten Verfahren zur Herstellung von Weisszement muss allerdings darauf geachtet werden, dass der CO-Gehalt am Ofenauslauf (d.h. im Bereich des Brenners) nicht zu hoch gewählt wird, da andernfalls das durch die reduzierende Atmosphäre erzeugte CO in den Vorwärmer gelangt, wo es schwer umgesetzt wird, einen zusätzlichen Wärmeverlust darstellt und unter Umständen eine Gefahr für das Elektrofilter bildet.

Zur Vermeidung dieser Schwierigkeiten wird daher bei den bekannten Verfahren die reduzierende Atmosphäre nur im Auslaufbereich des Drehrohrofens erzeugt, während im übrigen Bereich des Drehrohrofens eine neutrale Atmosphäre oder gar Sauerstoffüberschuss herrscht.

Es ist ferner ein Verfahren zur Herstellung von Zementklinker bekannt (DE-A-2 952 711), bei dem die flüchtigen Substanzen, wie Schwefel, Chlor und Alkaliverbindungen, teilweise oder vollständig aus dem Brennkreislauf entfernt werden sollen und dabei angestrebt wird, den grössten Teil der Energie von aus dem Ofen abgezweigten Gasen zurückzugewinnen. Bei diesem Verfahren werden aus dem Drehrohrofen an einer Zwischenstelle durch einen Ofenschussring Gase abgezweigt, die durch Einführen eines kalten Stoffes gekühlt werden. Der unter reduzierenden Bedingungen betriebene Drehrohrofen führt dabei zur Bildung von CO, das in einem Vorwärmer verbrannt wird, wobei eine teilweise Vorcalcination des Rohmateriales erfolgt.

Der Erfindung liegt die Aufgabe zugrunde, ein Verfahren zur Herstellung von Weisszement (der im Oberbegriff des Anspruches 1 vorausgesetzten Art) so auszubilden, dass die eingangs genannten Reduktionsreaktionen besonders zuverlässig und vollständig im Drehrohrofen ablaufen, ohne dass es im Vorwärmer durch einen CO-Gehalt der Abgase des Drehrohrofens zu den geschilderten Problemen kommt.

Diese Aufgabe wird erfindungsgemäss durch die kennzeichnenden Merkmale des Anspruches 1 gelöst.

Indem die reduzierende Atmosphäre über die gesamte Länge des Drehrohrofens aufrechterhalten wird, können die eingangs genannten Reduktionsreaktionen färbender Schwermetalloxyde zuverlässig und vollständig ablaufen, was eine wesentliche Voraussetzung für die Herstellung von qualitativ hochwertigem Weisszement ist. Die Aufrechterhaltung einer reduzierenden Atmosphäre über die gesamte Ofenlänge führt andererseits zu einem beträchtlichen CO-Gehalt der Ofenabgase. Dieses CO wird bei dem erfindungsgemässen Verfahren im Vorwärmer verbrannt, wobei das Rohmaterial unter Zufuhr von zusätzlichem Brennstoff vorcalciniert wird.

Auf diese Weise werden nicht nur die mit einem hohen CO-Gehalt im Vorwärmer verbundenen Gefahren vermieden, sondern es wird zugleich die Vorcalcination (d.h. die Entsäuerung des Rohmateriales vor Eintritt in den Drehrohrofen) durch die für die Verbrennung erforderliche Sauerstoffanreicherung im Bereich der Vorcalcination begünstigt.

Eine besonders zweckmässige Ausgestaltung des erfindungsgemässen Verfahrens sieht vor, die dem Vorwärmer zugeführte Verbrennungsluft und/oder die dem Drehrohrofen zugeführte Verbrennungsluft durch die Abgase des Vorwärmers vorzuwärmen. Durch eine solche Abgasrekuperation wird ein Grossteil der Abgaswärme auf die Verbrennungsluft übertragen, die dadurch vorgewärmt dem Drehrohrofen bzw. Vorwärmer zugeführt wird. Auf diese Weise lässt sich — bei gleichzeitig hohem Entsäuerungsgrad und dadurch bedingten verringerten Anlagekosten — ein besonders niedriger Wärmeverbrauch erzielen.

Die dem Drehrohrofen zugeführte Brennstoff- und Luftmenge wird so bemessen, dass die Abgase des Drehrohrofens einen CO-Gehalt von 0,5 bis 2,0 Vol.-%, vorzugsweise von 0,7 bis 1,5 Vol.-%, aufweisen. Bei konstanter Brennereinstellung und Brennergeometrie erzeugt man CO durch Reduzierung des Luftüberschusses, indem somit bei gleicher Brennstoffmenge weniger Sekundärluft zugeführt wird.

Das erzeugte CO wird in der Vorcalcinationszone des Vorwärmers vollständig mit umgesetzt. Zu diesem Zweck wird der Vorcalcinationszone als Tertiärluft soviel Verbrennungsluft zugeführt, dass der gesamte Brennstoff mit einer Luftüberschusszahl (nach der Vorcalcinierzone) von 1,15 verbrennen kann.

Mit sinkendem Luftüberschuss am Hauptbrenner, d.h. weniger Sekundärluft, reduziert sich die Gasmenge am Ofeneinlauf. Dementsprechend muss die der Vorcalcinationszone zugeführte Tertiärluftmenge erhöht werden, um den gesamten Brennstoff schliesslich vollständig in der Vorcalcinierzone umsetzen zu können.

Die erfindungsgemässe Betriebsweise wirkt sich auch insoweit positiv aus, als durch die verringerte Gasmenge am Ofeneinlauf weniger hochwertige Wärme aus dem Drehrohrofen in die Vorcalcinationszone geschleppt wird, was eine Senkung des Gesamtwärmeverbrauches ergibt. Bei sehr hohen CO-Gehalten verringert sich die Gasmenge am Ofeneinlauf nur noch unwesentlich; gleichzeitig wird mehr Wärme durch unverbranntes CO aus dem Drehrohrofen in die Vorcalcinationszone geführt, was den Wärmeverbrauch wieder ansteigen lässt. Das Optimum ist daher je nach den gegebenen Verhältnissen im allgemeinen bei einem CO-Gehalt (am Ofeneinlauf) zwischen 0,5 und 2,0% zu suchen.

In der Zeichnung zeigen

Fig. 1 eine Schemadarstellung einer Anlage zur Durchführung des erfindungsgemässen Verfahrens;

Fig. 2 ein Diagramm, das die Abhängigkeit der Tertiärluftmenge von der CO-Konzentration im Ofenabgas zeigt.

Die Anlage gemäss Fig. 1 enthält einen nur in Blockdarstellung veranschaulichten Wärmetauscher 1, der vorzugsweise als mehrstufiger Zyklonwärmetauscher ausgebildet ist. Dem Wärmetauscher 1 ist ein Drehrohrofen 2 nachgeschaltet, an den sich ein Kühler 3 anschliesst, in dem der Klinker 3 in einem Wasserbad abgeschreckt wird. Der Übergang vom Drehrohrofen 2 zum Kühler 3 ist so ausgestaltet, dass der im Drehrohrofen 2 in reduzierender Atmosphäre gebrannte Klinker beim Übergang in das Wasserbad des Kühlers 3 mit Atmosphäre nicht in Berührung kommt. Zu diesem Zweck kann beispielsweise die Austragsschurre des Drehrohrofens 2 direkt in das Wasserbad des Kühlers 3 einmünden.

Zur Anlage gehört weiterhin ein Rekuperator 4, der dazu dient, die in den Abgasen (Leitung 5) des Wärmetauschers 1 enthaltene Wärme auf die Verbrennungsluft (Leitung 6) zu übertragen. Die so vorgewärmte Verbrennungsluft 6 wird einerseits (Leitung 7) dem die Vorcalcinationszone bildenden untersten Teil des Wärmetauschers 1 zugeführt (sog. Tertiärluft) und andererseits als sog. Sekundärluft dem Hauptbrenner 8 des Drehrohrofens 2 (Leitung 9).

Brennstoff zur weitgehenden Entsäuerung (Vorcalcination) des im Wärmetauscher 1 vorgewärmten Rohmateriales wird ferner der Vorcalcinationszone bei 10 zugeführt. Die aus dem Drehrohrofen 2 dem Vorwärmer (Wärmetauscher 1) zugeführten Ofenabgase sind mit 11 bezeichnet, das aus dem Wärmetauscher 1 in den Drehrohrofen 2 eintretende, hoch vorerhitzte und weitgehend entsäuerte Material mit 12.

Wie bereits erläutert, wird im Drehrohrofen 2 über seine gesamte Länge eine reduzierende Atmosphäre aufrechterhalten, indem die über die Leitung 9 zugeführte Sekundärluftmenge entsprechend verringert wird.

Fig. 2 veranschaulicht den Zusammenhang zwischen der in der Ordinate aufgetragenen CO-Konzentration im Ofenabgas und der in der Abszisse aufgetragenen, über die Leitung 7 zugeführten Tertiärluftmenge (als Prozentsatz der Gesamtluftmenge). Die Kurve a zeigt die Verhältnisse für einen zweistufigen Zyklonwärmetauscher und die Kurve b die Verhältnisse für einen vierstufigen Zyklonwärmetauscher.

Zur weiteren Erläuterung der Erfindung sind in der nachstehenden Tabelle die Gasmengen und Temperaturen für einen mittleren CO-Gehalt am Ofeneinlauf von 1,0 Vol.-% für einen zweistufigen und einen vierstufigen Vorwärmer angegeben. Dabei ist angenommen, dass dem zweistufigen Vorwärmer in der Vorcalcinierzone 50% der gesamten Brennstoffmenge zugesetzt werden und beim vierstufigen Vorwärmer 30%. Die Abgasrekuperation ist in beiden Fällen mit 70% angenommen.

| | Zweistufiger Vorwärmer | Vierstufiger Vorwärmer |
|---|---|---|
| CO-Gehalt am Ofeneinlauf (%) | 1,0 | 1,0 |
| Luftüberschuss am Ofeneinlauf (—) | 1,02 | 1,02 |
| Gasmenge am Ofeneinlauf ($m^3_n$/kg Kl) | 0,8490 | 1,0775 |
| Sekundärluftmenge ($m^3_n$/kg Kl) | 0,7157 | 0,9112 |
| Sekundärlufttemperatur (°C) | 447 | 332 |
| Tertiärluftmenge ($m^3_n$/kg Kl) | 0,9555 | 0,5919 |
| Tertiärlufttemperatur (°C) | 447 | 332 |
| Luftüberschuss Vorcalcinierzone (+) | 1,15 | 1,15 |
| Abgasmenge ($m^3_n$/kg Kl) | 2,1219 | 2,0341 |
| Abgastemperatur (°C) | 630 | 465 |
| Entsäuerungsgrad (%) | 88,46 | 86,11 |
| Gesamtwärmebedarf (kcal/kg Kl) | 1345 | 1223 |

**Patentansprüche**

1. Verfahren zur Herstellung von Weisszement, bei dem

a) das Rohmaterial in einem Vorwärmer mit den heissen Abgasen eines nachgeschalteten Drehrohrofens erhitzt wird,

b) das erhitzte Rohmaterial anschliessend im Drehrohrofen in reduzierender Atmosphäre gebrannt wird,

c) und der aus dem Drehrohrofen ausgetragene Klinker durch sofortiges Abschrecken unter Luftabschluss gekühlt wird,

gekennzeichnet durch folgende Merkmale:

d) die reduzierende Atmosphäre wird im Drehrohrofen über die gesamte Ofenlänge aufrechterhalten;

e) die dem Drehrohrofen zugeführte Brennstoff- und Luftmenge wird so bemessen, dass die Abgase des Drehrohrofens einen CO-Gehalt von 0,5 bis 2,0 Vol.-%, vorzugsweise von 0,7 bis 1,5 Vol.-%, aufweisen;

f) die Abgase des Drehrohrofens, vorgewärmte Verbrennungsluft und zusätzlicher Brennstoff werden einer Vorcalcinationszone zugeführt, in der das im Vorwärmer vorgewärmte Rohmaterial durch Verbrennung des zusätzlichen Brennstoffes und des in den Abgasen des Drehrohrofens enthaltenen CO vorcalciniert wird;
g) die der Vorcalcinationszone zugeführte Verbrennungsluft wird hierbei so bemessen, dass das in den Abgasen des Drehrohrofens enthaltene CO in der Vorcalcinationszone vollständig umgesetzt wird.

2. Verfahren nach Anspruch 1, dadurch gekennzeichnet, dass die dem Vorwärmer zugeführte Verbrennungsluft durch die Abgase des Vorwärmers vorgewärmt wird.

3. Verfahren nach Anspruch 1, dadurch gekennzeichnet, dass die dem Drehrohrofen zugeführte Verbrennungsluft durch die Abgase des Vorwärmers vorgewärmt wird.

4. Anlage zur Durchführung des Verfahrens nach den Ansprüchen 1 bis 3, dadurch gekennzeichnet, dass die Abgasleitung des Vorwärmers (1) mit einem Rekuperator (4) verbunden ist, dessen die vorzuwärmende Verbrennungsluft führende Leitung einerseits mit der Vorcalcinationszone und andererseits mit dem brennerseitigen Ende des Drehrohrofens (2) verbunden ist.

## Claims

1. Process for manufacturing white cement, in which

a) the raw material is heated in a preheater with the hot exhaust gases of a rotary kiln coupled with the outlet side of the preheater,
b) the heated raw material is then fired in the rotary kiln in a reducing atmosphere,
c) and the clinker discharged from the rotary kiln is cooled by immediate quenching with air excluded,

characterised by the following features:

d) the reducing atmosphere is maintained over the entire length of the rotary kiln,
e) the quantity of fuel and air supplied to the rotary kiln is such that the exhaust gases of the rotary kiln have a CO content of 0.5 to 2.0% by volume, preferably 0.7 to 1.5% by volume,
f) the exhaust gases of the rotary kiln, preheated air for combustion and additional fuel are supplied to a precalcination zone in which the raw material preheated in the preheater is precalcined by combustion of the additional fuel and the CO contained in the exhaust gases of the rotary kiln,
g) the quantity of the air for combustion supplied to the precalcination zone is such that the CO contained in the exhaust gases of the rotary kiln is completely converted in the precalcination zone.

2. Process according claim 1, characterised in that the air for combustion which is supplied to the preheater is preheated by the exhaust gases of the preheater.

3. Process according claim 1, characterised in that the air for combustion supplied to the rotary kiln is preheated by the exhaust gases of the preheater.

4. Apparatus for carrying out the process according claims 1 to 3, characterised in that the exhaust gas duct from the preheater (1) is connected to a recuperator (4), the duct of the recuperator for the air for combustion which is to be preheated being connected on the one hand to the precalcination zone and on the other hand to the end of the rotary kiln (2) nearest the burner.

## Revendications

1. Procédé de fabrication de ciment blanc suivant lequel:

a) le mélange cru subit un chauffage dans un réchauffeur au moyen des gaz chauds sortant d'un four tubulaire rotatif monté en aval,
b) le mélange cru chauffé subit ensuite la cuisson dans le four tubulaire rotatif en atmosphère réductrice,
c) puis le clinker déchargé du four tubulaire subit un refroidissement brusque immédiat à l'abri de l'air,

caractérisé par les particularités suivantes:

d) l'atmosphère réductrice est maintenue à l'intérieur du four tubulaire rotatif sur la longueur totale de ce dernier;
e) les débits de combustible et d'air dirigés sur le four tubulaire sont calculés de manière que les gaz sortant de ce four aient une teneur en CO de 0,5 à 2,0% en volume, de préférence de 0,7 à 1,5% en volume;
f) les gaz sortant du four tubulaire, de l'air comburant réchauffé et un complément de combustible sont dirigés sur une zone de précalcination dans laquelle le mélange cru ayant passé dans le réchauffeur subit la précalcination par combustion du complément de combustible et du CO que contiennent les gaz sortant du four tubulaire;
g) le débit d'air comburant dirigé sur la zone de précalcination est calculé de manière que le CO que contiennent les gaz sortant du four tubulaire se décompose totalement dans ladite zone de précalcination.

2. Procédé selon la revendication 1, caractérisé en ce que l'air comburant dirigé sur le réchauffeur est lui-même réchauffé par les gaz sortant de ce dernier.

3. Procédé selon la revendication 1, caractérisé en ce que l'air comburant dirigé sur le four tubulaire est réchauffé par les gaz sortant du réchauffeur.

4. Installation pour la mise en oeuvre du procédé selon les revendications 1 à 3, caractérisée en ce que la canalisation des gaz sortant du réchauffeur (1) est reliée à un récupérateur (4) dont la canalisation conduisant l'air comburant devant être réchauffé est reliée d'une part à la zone de précalcination et d'autre part à l'extrémité côté brûleur du four tubulaire (2).

FIG.1

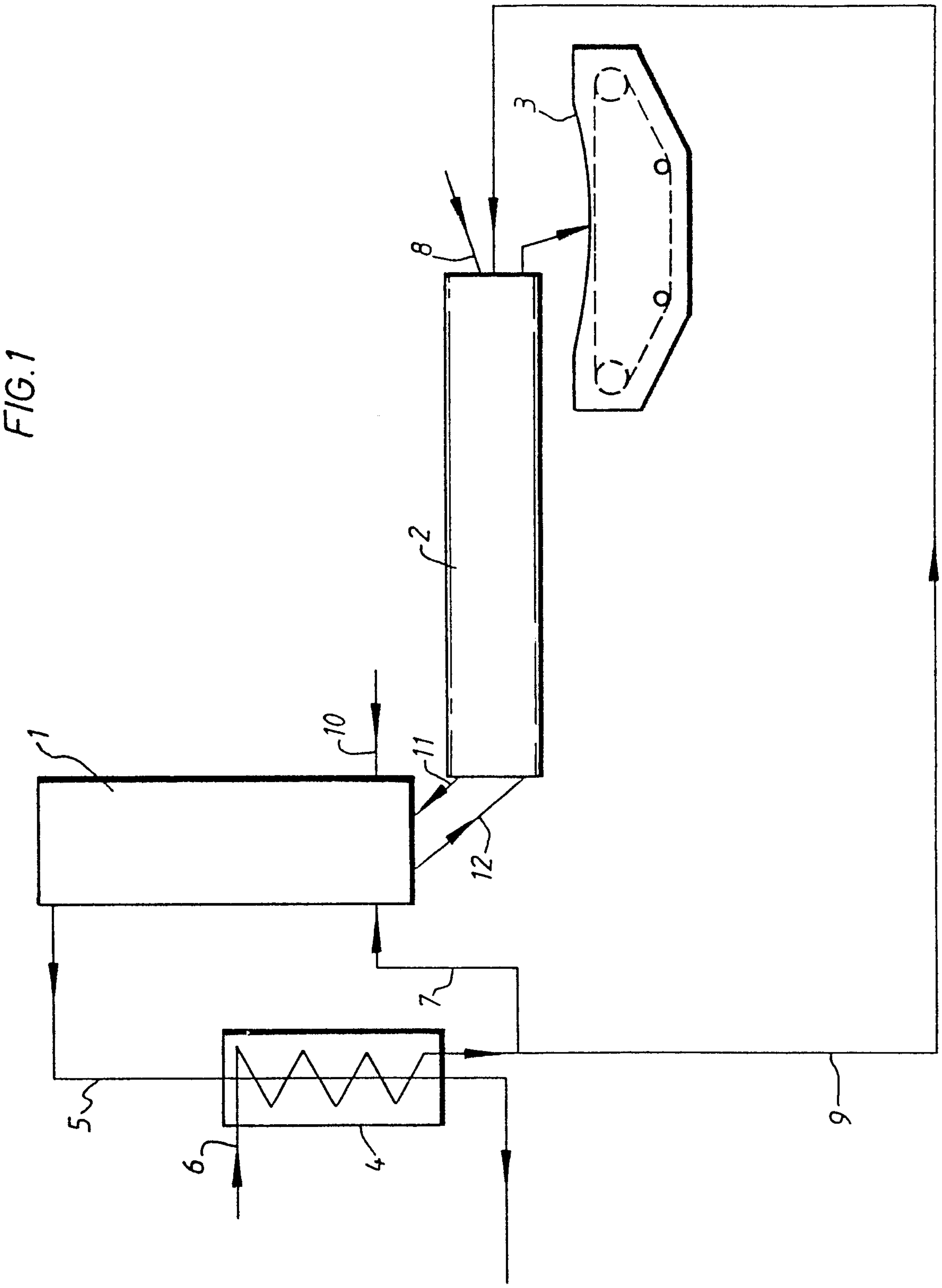

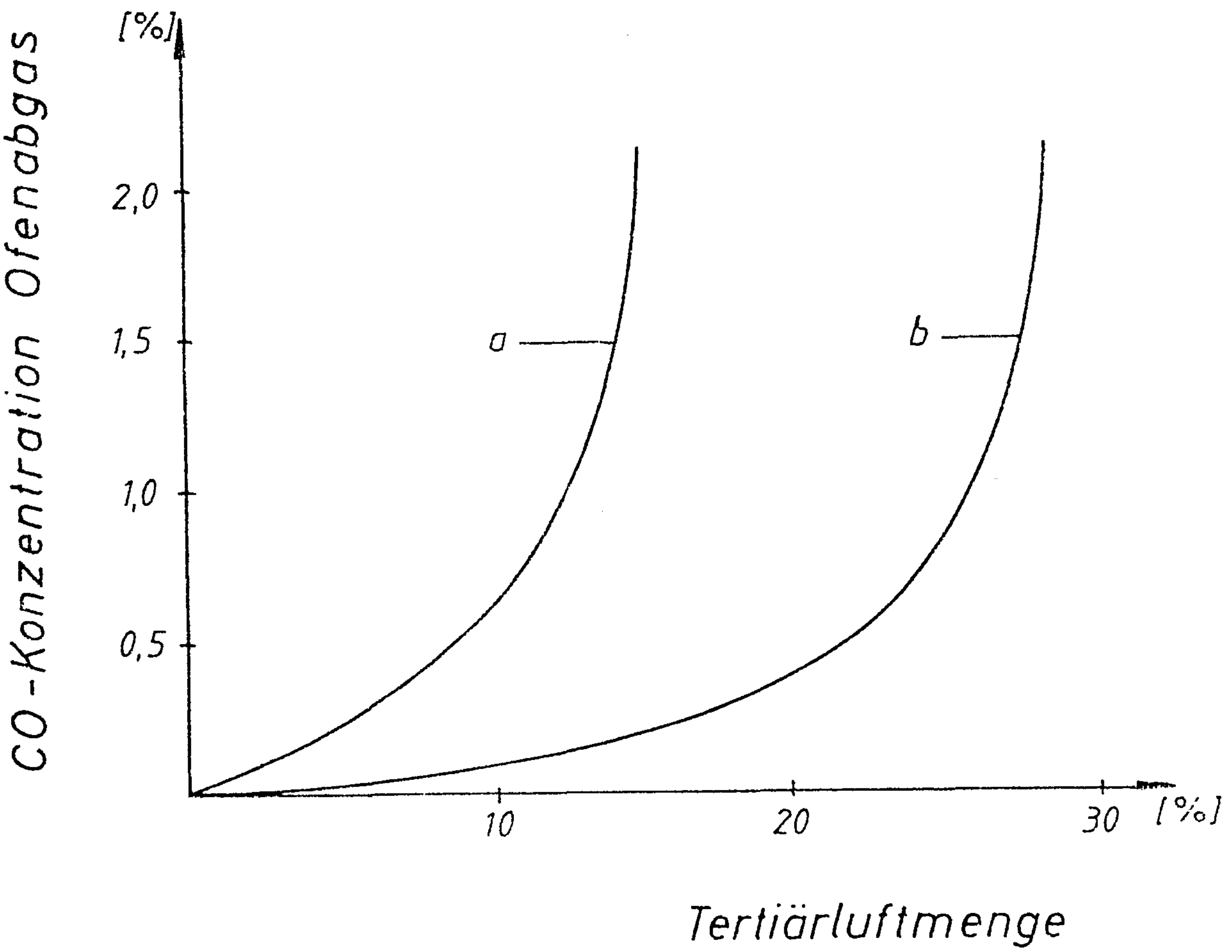
[%]
2,0
1,5
1,0
0,5
CO-Konzentration Ofenabgas
a
b
10
20
30
[%]
Tertiärluftmenge